# EUROPÄISCHE PATENTSCHRIFT

(11) **EP 3 153 234 B1**
(45) Veröffentlichungstag und Bekanntmachung des Hinweises auf die Patenterteilung: **14.03.2018**
(21) Anmeldenummer: 15189183.5
(22) Anmeldetag: 09.10.2015
(51) Int. Cl.: B01L 3/02, F04B 9/00, F04B 19/22, F04B 53/14, F04B 53/16, G01N 30/00, G01N 1/14, G01N 35/10

(54) **BETÄTIGUNGSVORRICHTUNG FÜR EINEN KOLBEN EINER SPRITZE**
ACTUATING DEVICE FOR A PISTON OF A SYRINGE
DISPOSITIF D'ACTIONNEMENT POUR UN PISTON DE SERINGUE

(43) Veröffentlichungstag der Anmeldung: 12.04.2017
(73) Patentinhaber: CTC Analytics AG, 4222 Zwingen (CH)
(72) Erfinder: Zumbach, Melchior, 5600 Lenzburg (CH); Kernen, Roland, 4132 Muttenz (CH)
(74) Vertreter: Keller & Partner Patentanwälte AG

(56) Entgegenhaltungen:
- EP-B1- 2 261 676
- US-A- 6 036 101
- US-A1- 2001 034 506

## Beschreibung

### Technisches Gebiet

Die Erfindung betrifft eine Betätigungsvorrichtung für einen Kolben einer Spritze, bei welchem mittels Kontaktelementen mit auf dem Kolben der Spritze befindlichen Kontaktflächen elektrische Signale zwischen der Spritze und der Betätigungsvorrichtung übertragen werden können. Ferner betrifft die Erfindung ein Probenentnahmesystem mit einer Betätigungsvorrichtung und mindestens einer Spritze sowie eine für dieses Probenentnahmesystem geeigneten Spritze.

### Stand der Technik

Betätigungsvorrichtungen für Kolben von Spritzen sowie Probenentnahmesysteme sind auf dem Gebiet der Laborausrüstung bereits seit langem bekannt. Solche Vorrichtungen und Systeme werden insbesondere im Zuge der Laborautomation eingesetzt um eine grosse Anzahl an Proben, beispielsweise für eine nachfolgende chromatographische Analyse, mit hoher Präzision vorzubereiten. Bei solchen Pipettiervorgängen ist es wünschenswert, wenn die automatischen Systeme und Vorrichtungen Daten über die verwendete Spritze erhalten, damit allfällige Fehler, die durch die Verwendung von ungeeigneten oder zu alten Spritzen entstehen können, zu vermeiden. Ferner ist es im Zuge der Dokumentation, insbesondere im medizinischen Sektor von Vorteil, wenn beispielsweise zweifelfrei nachvollzogen werden kann, welche Probe mit welcher Spritze vorbereitet wurde. Daher sind im Stand der Technik einige Systeme und Vorrichtungen bekannt, bei denen Informationen zwischen einer Betätigungsvorrichtung oder einem Probenentnahmesystem und einem auf der Spritze befindlichen Speicher ausgetauscht werden, wie z.B. in der US6036101A.

### Darstellung der Erfindung

Aufgabe der Erfindung ist es, eine dem eingangs genannten technischen Gebiet zugehörende Betätigungsvorrichtung für einen Kolben einer Spritze zu schaffen, mit welcher auf eine möglichst einfache Weise ein Datenaustausch mit einem auf der Spritze angeordneten Speicherelement ermöglicht werden kann.

Die Lösung der Aufgabe ist durch die Merkmale des Anspruchs 1 definiert. Gemäss der Erfindung verfügt die Betätigungsvorrichtung über eine Halterung für einen Zylinder der Spritze. Ferner umfasst die Betätigungsvorrichtung eine relativ zur Halterung linear bewegbare Kupplung mit einer Aufnahme, in welche der Kolben der Spritze eingeführt werden kann, mindestens ein Befestigungselement, mit welchem der Kolben lösbar in der Aufnahme befestigt werden kann, sowie einen Linearantrieb für die Kupplung. Die Kupplung verfügt über mindestens zwei elektrisch leitfähige Kontaktelemente, welche auf einer Innenwandung der Aufnahme angeordnet sind, um mit entsprechenden elektrisch leitfähigen Kontaktflächen des Kolbens in Kontakt zu treten, wenn der Kolben in die Aufnahme eingeführt ist.

Durch das mindestens eine Befestigungselement der Kupplung wird eine feste mechanische Verbindung zwischen Kolben und Kupplung erzielt, wodurch ein zuverlässiger Kontakt zwischen den elektrisch leitfähigen Kontaktelementen sowie der Kontaktflächen des Kolbens ermöglicht wird. Ein Datenaustausch zwischen eine auf dem Kolben der Spritze angeordneten Speicherelement sowie der Betätigungsvorrichtung lässt sich ohne teure elektronische Bauteile, wie etwa Sender oder Empfänger für drahtlose Datenübermittlung realisieren, womit der Herstellungspreis sowohl der Betätigungsvorrichtung als auch des Kolbens klein gehalten werden können. Durch den elektrischen Kontakt kann ferner ein auf dem Kolben angeordnetes Speicherelement mit Strom versorgt werden, womit keine zusätzliche Stromquelle im oder am Kolben angeordnet werden muss.

Die Halterung verfügt bevorzugt über eine Befestigungsvorrichtung, mit welcher der Zylinder der Spritze lösbar mit dieser befestigt werden kann. Vorzugsweise ist die Befestigungsvorrichtung derart ausgestaltet, dass der Zylinder der Spritze formschlüssig in der Halterung gehalten wird. Die Halterung ist vorzugsweise lösbar mit der Betätigungsvorrichtung verbunden. Um eine andere Spritze mit der Betätigungsvorrichtung zu verwenden, wird in diesem Fall die Halterung gegen eine Halterung mit der benötigten Spritze ausgewechselt. Zum lösbaren Verbinden der Halterung mit der Betätigungsvorrichtung verfügen diese über entsprechende Haltemittel, welche insbesondere derart ausgestaltet sind, dass ein automatischer Austausch der Halterung - und somit der in der Halterung eingelegten Spritze - erfolgen kann. Eine derartige Halterung wird beispielsweise in der EP 2 261 676 B1 der Anmelderin beschrieben. Dadurch kann die erfindungsgemässe Betätigungsvorrichtung in einem Pipettierroboter mit automatischem Spritzenwechsel eingesetzt werden.

Die Innenwandung der Aufnahme ist vorzugsweise derart ausgestaltet, dass diese einen Innenraum definiert, welcher im Wesentlichen der Aussenform eines Endbereichs des Kolbens entspricht, so dass eine möglichst spielfreie Halterung des Kolbens innerhalb der Aufnahme ermöglicht wird.

Das mindestens eine Befestigungselement ist vorzugsweise derart ausgestaltet, dass dieses den Kolben kraft- und/oder formschlüssig lösbar in der Aufnahme befestigt.

Die Kupplung kann mittels des Linearantriebes linear relativ zur Halterung bewegt werden. Da der Zylinder der Spritze in der Halterung und der Kolben in der Kupplung befestigt sind, führt diese Relativbewegung zwischen Halterung und Kupplung zu einer linearen Bewegung des Kolbens innerhalb des Zylinders. Dadurch können Flüssigkeiten in die Spritze aufgezogen beziehungsweise ausgestossen werden.

Innerhalb der Aufnahme ist vorzugsweise ein Stössel angeordnet, mit welchem ein in der Aufnahme befindlicher Kolben beim Lösen ausgestossen werden kann. Dieser Stössel ist insbesondere bevorzugt über ein Federelement in Richtung einer Öffnung vorgespannt, durch welche der Kolben in die Aufnahme eingeführt werden kann. Durch diese Vorspannung wird zudem auf einen in der Aufnahme befindlichen Kolben dauerhaft eine Kraft ausgeübt, wodurch ein allfälliges Spiel in Axialrichtung zwischen Kolben und Befestigungselement verringert werden kann. Dadurch ist eine präzisere Führung des Kolbens mittels der Kupplung möglich.

Insbesondere bevorzugt sind die mindestens zwei elektrisch leitfähigen Kontaktelemente auf einer Seite des Stössels angeordnet, die mit dem Kolben in Kontakt tritt, wenn der Kolben in die Aufnahme eingeführt ist. Durch die Vorspannung des Stössels werden die mindestens zwei Kontaktelemente gegen den Kolben gedrückt, was den mechanischen Kontakt der elektrisch leitfähigen Kontaktelemente mit dem Kolben erheblich verbessert. Alternativ kann auch nur eines der mindestens zwei elektrisch leitfähigen Kontaktelemente auf dem Stössel angeordnet sein. In diesem Fall kann die Innenwandung der Aufnahme das zweite Kontaktelement bilden oder ein mindestens weiteres Kontaktelement aufweisen.

Ferner kann auch vorgesehen sein, dass der Stössel als ein erstes der mindestens zwei Kontaktelemente ausgebildet ist. Bei dieser Ausführungsform muss der Stössel aus einem elektrisch leitfähigen Material gefertigt sein.

Im Rahmen der vorliegenden Anmeldung wird unter "Axialrichtung" die Richtung verstanden, in welcher die Längsachse der Spritze sowie des Kolbens liegen, wenn die Spritze an der Betätigungsvorrichtung befestigt ist. Die lineare Verschiebung der Kupplung relativ zur Halterung erfolgt entlang dieser Axialrichtung.

Die Betätigungsvorrichtung ist insbesondere bevorzugt an einem mindestens in einer Raumachse verschiebbar gelagerten Arm eines Probenentnahmesystems angeordnet. Das Probenentnahmesystem ist insbesondere als Pipettierroboter ausgestaltet, welcher eine automatische Verarbeitung von Flüssigkeitsproben, beispielsweise für automatisierte Chromatographieverfahren, insbesondere Flüssigchromatorgraphie, Massenspektrometrie oder Gaschromatographie.

Vorzugsweise ist die Innenwandung der Kupplung als ein erstes Kontaktelement der mindestens zwei Kontaktelemente ausgestaltet. Hierzu ist die Innenwandung der Aufnahme aus einem leitfähigen Material, wie beispielsweise Kupfer oder Stahl gefertigt. Das mindestens eine weitere elektrisch leitfähige Kontaktelement ist bei dieser Ausführung elektrisch von der Innenwandung der Aufnahme isoliert. Insbesondere bevorzugt führt bei dieser Ausführungsform die Innenwandung das Bezugspotential, dient demnach also als Masse für ein auf der Spritze angeordnetes Speicherelement.

Vorzugsweise ist ein erstes Kontaktelement der mindestens zwei Kontaktelemente als runde Fläche und das mindestens eine weitere Kontaktelement als zur runden Fläche konzentrischer Kreis ausgestaltet.

Dadurch kann stets eine Kontaktierung der auf dem Kolben der Spritze befindlichen Kontaktflächen durch die Kontaktelemente gewährleistet werden, ohne dass der Kolben eine spezifische Lage bezüglich der Drehung um seine Längsachse einnehmen muss. Beispielsweise kann so unabhängige der Drehlage des Kolbens ein elektrischer Kontakt zwischen auf diesem befindliche als Pins ausgestaltete Kontaktflächen und den Kontaktelementen hergestellt werden. Dies vereinfacht die Handhabung der Betätigungsvorrichtung.

Bevorzugt sind die mindestens zwei Kontaktelemente durch ein Federelement innerhalb der Aufnahme entgegen einer Einführrichtung des Kolbens vorgespannt. Vorzugsweise erfolgt die Vorspannung der mindestens zwei Kontaktelemente über ein gemeinsames Federelement. Insbesondere bevorzugt ist für jedes der mindestens zwei Kontaktelemente ein separates Federelement vorgesehen. Dadurch lässt sich sicherstellen, dass die Kontaktelemente stets auf die Kontaktflächen einer in der Aufnahme befestigten Spritze gedrückt werden, unabhängig von allfälligen Fertigungstoleranzen.

Das mindestens eine Befestigungselement ist vorzugsweise als Formschlusselement ausgestaltet, welches in eine umlaufende Nut des Kolbens eingreifen kann, wenn der Kolben in die Aufnahme eingeführt ist.

Vorzugsweise umfasst das Formschlusselement mindestens eine Kugel, welche in einer Öffnung der Aufnahme eingelegt ist, wobei auf der Aussenseite der Aufnahme eine Hülse angeordnet ist, welche relativ zur Aufnahme von einer ersten Position in eine zweite Position bewegbar ist, so dass in der ersten Position die mindestens eine Kugel durch die Hülse in einen Innenraum der Aufnahme gedrückt wird und die mindestens eine Kugel in der zweiten Position aus dem Innenraum bewegbar ist.

Dadurch ergibt sich ein sehr einfach ausgestaltetes und simpel zu bedienendes Befestigungselement. Die Kugel greift vorzugsweise in eine den Kolben umlaufende Nut ein, um den Kolben formschlüssig in der Aufnahme zu befestigen. Dadurch kann der Kolben stets in der Aufnahme befestigt werden, ohne dass dieser vorerst in die richtige Position gedreht werden muss.

Insbesondere bevorzugt umfasst das Formschlusselement drei Kugeln, welche vorzugsweise in einem Winkel von 120° zueinander um die Axialrichtung herum angeordnet sind. Dadurch erfolgt durch das Formschlusselement eine Zentrierung des Kolbens auf die Axialrichtung.

Vorzugsweise ist die Hülse mittels eines ersten Federelements in die erste Position vorgespannt. Bevorzugt verfügt die Betätigungsvorrichtung über einen Aktuator, mit welchem die Hülse automatisch von der ersten Position in die zweite Position und wieder zurück bewegt werden kann. Dadurch kann das Befestigen und Freigeben eines Kolbens in beziehungsweise aus der Aufnahme ohne Eingreifen von Bedienpersonal erfolgen, womit sich die Betätigungsvorrichtung in einen automatischen Pipettierroboter verwenden lässt.

Die Öffnung, die Kugel sowie die Hülse sind vorzugsweise derart ausgestaltet, dass die Kugel nicht aus der Kupplung herausfallen kann.

Bevorzugt umfasst der Linearantrieb mindestens eine Spindel. Durch die Verwendung einer Spindel lässt sich die Kupplung und somit ein in der Aufnahme befestigter Kolben der Spritze sehr präzise bewegen, was bei einem Einsatz der Betätigungsvorrichtung in einem Pipettierroboter die Entnahme beziehungsweise Abgabe von genau definierten Mengen einer Flüssigkeit durch die Spritze ermöglicht.

Das mindestens eine Befestigungselement ist vorzugsweise derart ausgestaltet, dass der Kolben automatisch in der Aufnahme befestigt und von dieser gelöst werden kann.

Die vorliegende Anmeldung betrifft ferner ein Probenentnahmesystem mit einer erfindungsgemässen Betätigungsvorrichtung sowie mindestens einer Spritze. Die Spritze weist einen Zylinder und einen teilweise innerhalb des Zylinders angeordneten und darin linear verschiebbaren Kolben auf, wobei am einen Ende des Kolbens, welcher nicht innerhalb des Zylinders angeordnet ist, ein nicht-flüchtiges Speicherelement angeordnet ist. Das Speicherelement ist mit mindestens zwei elektrisch leitfähigen Kontaktflächen verbunden, welche derart geformt und auf dem Zylinder angeordnet sind, dass diese mit den elektrisch leitfähigen Kontaktelementen der Betätigungsvorrichtung in Kontakt treten können, wenn der Kolben in die Aufnahme eingeführt ist.

Vorzugsweise ist die Betätigungsvorrichtung mit einem elektronischen Steuersystem verbunden oder umfasst ein elektronisches Steuersystem, wobei das elektronische Steuersystem dazu ausgelegt ist, aus dem nicht-flüchtigen Speicherelement Daten auszulesen und/oder in dieses Daten zu schreiben.

Dadurch können vor einer Probenentnahme Daten aus dem Speicherelement entnommen und nach erfolgter Probenentnahme Daten auf das Speicherelement geschrieben beziehungsweise Daten verändert werden. Insbesondere bei einem vollautomatischen System kann dadurch beispielsweise überprüft werden, ob eine Spritze mit dem korrekten Volumen mit der Betätigungsvorrichtung verbunden ist. Ferner können Daten über die Benutzung der Spritze auf dem Speicherelement hinterlegt werden.

Das elektronische Steuersystem ist vorzugsweise derart ausgestaltet, dass mit diesem ein automatisches Befestigen und Freigeben der Spritze ermöglicht wird. Das heisst dass mit dem elektronischen Steuersystem Motoren angesteuert werden können, mit denen sich die Betätigungsvorrichtung in mindestens einer Raumrichtung bewegen lässt. Ferner ist auch der Linearantrieb der Betätigungsvorrichtung vorzugsweise mit dem elektronischen Steuersystem verbunden und lässt sich durch dieses kontrollieren.

Das elektronische Steuersystem ist ferner auch derart ausgestaltet, dass sich dieses über einen Anschluss mit einem Netzwerk verbinden lässt, um eine vollständige Integration des Probenentnahmesystems in eine Produktions- oder Analyseanlage und/oder den Datenaustausch mit weiteren elektronischen Geräten zu ermöglichen.

Vorzugsweise beinhalten die Daten mindestens eine der folgenden Informationen: Anzahl ausgeführter Kolbenhübe, Grösse des Zylinders, Seriennummer der Spritze, Herstellungsdatum der Spritze, Gesamtweg der ausgeführten Kolbenhübe, Hersteller der Spritze, Datum des ersten ausgeführten Kolbenhubs, Grösse der mit dem Zylinder verbundenen Kanüle.

Anhand dieser Daten lässt sich durch das elektronische Steuersystem überprüfen, ob die an der Betätigungsvorrichtung befestigte Spritze für die vorgesehene Probenentnahme eignet. Einerseits können die übermittelten Daten zur Spritze direkt mit den erforderlichen Eigenschaften für die geplante Probenentnahme verglichen werden. Andererseits ist es auch möglich anhand z.B. einer Serien- oder Lotnummer durch Abgleich mit einer Datenbank, welche entweder in einem Speicher des elektronischen Steuersystems hinterlegt oder über ein Netzwerk auf einem entfernten Server zur Abfrage bereit steht, die Eignung der Spritze für die geplante Probenentnahme zu prüfen.

Vorzugsweise umfasst das Formschlusselement mindestens eine Kugel, welche in einer Öffnung der Aufnahme eingelegt ist, wobei auf der Aussenseite der Aufnahme eine Hülse angeordnet ist, welche relativ zur Aufnahme von einer ersten Position in eine zweite Position bewegbar ist, so dass in der ersten Position die mindestens eine Kugel durch die Hülse in einen Innenraum der Aufnahme gedrückt wird und die mindestens eine Kugel in der zweiten Position aus dem Innenraum bewegbar ist. Der Kolben der Spritze verfügt auf einer äusseren Mantelfläche über eine umlaufende Nut, in welche die Kugel eingreift, wenn die Hülse in der ersten Position ist.

Eine derartige Ausgestaltung ermöglicht eine mechanisch möglichst einfache jedoch effiziente Befestigung des Kolbens in der Aufnahme. Da die Kugel über den gesamten Umfang des Kolbens mit der Nut in Eingriff gebracht werden kann muss auch der Kolben nicht spezifisch ausgerichtet werden, um eine Befestigung zu ermöglichen, was die Handhabung wesentlich vereinfacht.

Insbesondere bevorzugt umfasst das Formschlusselement drei Kugeln, welche in entsprechenden Öffnungen der Aufnahme eingelegt sind. Die Kugeln sind insbesondere je um 120° zueinander versetz am Umfang der Aufnahme angeordnet. Dadurch wird eine Zentrierung des Kolbens ermöglicht.

Die folgende Anmeldung bezieht sich ferner auf eine Spritze für ein erfindungsgemässes Probenentnahmesystem. Die Spritze umfasst einen Zylinder und einen teilweise innerhalb des Zylinders angeordneten und darin linear verschiebbaren Kolben, wobei am einen Ende des Kolbens, welcher nicht innerhalb des Zylinders angeordnet ist, ein nicht-flüchtiges Speicherelement angeordnet ist, welches mit mindestens zwei elektrisch leitfähigen Kontaktflächen verbunden ist.

Die elektrisch leitfähigen Kontaktflächen befinden sich auf der Oberfläche des Kolbens, damit diese mit den entsprechenden Kontaktelementen der Aufnahme in Kontakt treten können, wenn der Kolben in der Aufnahme der Betätigungsvorrichtung eingelegt ist.

Das Speicherelement ist vorzugsweise in das Material des Kolbens eingelassen und über elektrische Leitungen mit den Kontaktflächen verbunden. Beispielsweise können das Speicherelement sowie zu diesem führende Leitungen, die mit den Kontaktflächen verbunden werden, bei der Herstellung des Kolben in einem Spritzgussverfahren überspritzt werden. Bei dieser Herstellungsmethode muss sichergestellt werden, dass das verwendete Speicherelement die Temperaturen während des Spritzgiessens schadlos übersteht.

Vorzugsweise ist eine erste Kontaktfläche der mindestens zwei Kontaktflächen rund ausgestaltet und die mindestens eine weitere Kontaktfläche als zur runden Kontaktfläche konzentrischer Kreis ausgestaltet.

Dadurch kann stets eine Kontaktierung der Kontaktelemente innerhalb der Aufnahme der Betätigungsvorrichtung gewährleistet werden, ohne dass der Kolben eine spezifische Lage bezüglich der Drehung um seine Längsachse einnehmen muss.

Bei der Anordnung von mehr als zwei Kontaktflächen sind diese mit Ausnahme der ersten, runden Kontaktfläche, als voneinander beabstandete und relativ zueinander konzentrisch angeordnete Kreise ausgestaltet.

Die mindestens zwei Kontaktflächen sind dabei auf einer Grundfläche des Kolbens angeordnet, welche rechtwinklig zur Axialrichtung liegt.

Alternativ kann eine erste Kontaktfläche als auf der Mantelfläche des Kolben angeordnete Leiterbahn ausgestaltet sein, welche bei in der Aufnahme eingelegtem Kolben mit der Innenwandung der Aufnahme in Kontakt steht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung eines erfindungsgemässen Probenentnahmesystems;
- Fig. 2: Schnittzeichnung des Probenentnahmesystems der Fig. 1;
- Fig. 3: Schnittzeichnung des Probenentnahmesystems der Fig. 2, bei welchem die Spritze aus der Betätigungsvorrichtung freigegeben ist;
- Fig. 4: eine detailliertere Darstellung einer Chipanordnung mit Kontaktflächen und Speicherelement.

Grundsätzlich sind in den Figuren gleiche Teile mit gleichen Bezugszeichen versehen.

### Wege zur Ausführung der Erfindung

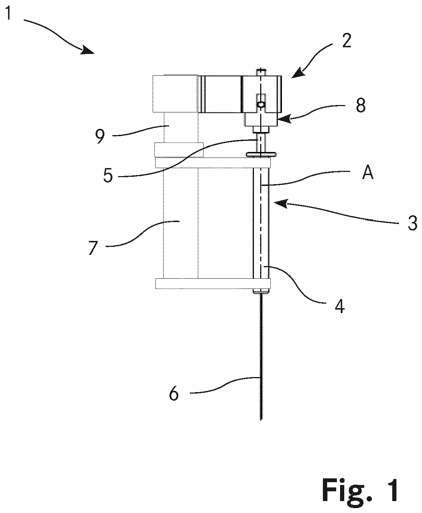

Die Fig. 1 zeigt eine schematische Darstellung eines erfindungsgemässen Probenentnahmesystems 1 mit einer Betätigungsvorrichtung 2, mit welcher eine Spritze 3 befestigt ist. Die Spritze 3 verfügt über einen Zylinder 4 in welchem ein Kolben 5 linear verschiebbar gelagert ist. Ferner ist eine Kanüle 6 mit dem Zylinder 4 der Spritze 3 verbunden, über welche eine Flüssigkeit aufgezogen beziehungsweise ausgestossen werden kann.

Die Betätigungsvorrichtung 2 verfügt über eine Halterung 7 für den Zylinder 4 der Spritze 3 sowie über eine Kupplung 8, mit welcher der Kolben 5 der Spritze 3 lösbar verbunden ist. Über einen Linearantrieb 9 lässt sich die Kupplung 8 relativ zur Halterung 7 linear verschieben. Durch diese Verschiebung wird auch der Kolben 5 innerhalb des Zylinders 4 verschoben. Der Verschiebeweg des Kolbens 5 innerhalb des Zylinders 4 der Spritze 3 erfolgt in Axialrichtung. Die Axialrichtung ist parallel mit der Längsachse A der Spritze 3.

Die Halterung 7 ist über Haltemittel lösbar mit der Betätigungsvorrichtung 1 verbunden, so dass die Halterung 7 mitsamt der mit dieser befestigten Spritze 3 entfernt beziehungsweise ausgetauscht werden kann. So lässt sich die mit der Betätigungsvorrichtung 1 verwendete Spritze 3 sehr schnell und einfach austauschen, da nicht eine neue Spritze 3 an der Halterung 4 befestigt werden muss, sondern lediglich die Halterung 4, welche über Haltemittel mit der Betätigungsvorrichtung 1 verbunden werden kann, ausgewechselt wird. Somit entfällt beim Austauschen der Spritze 3 das, insbesondere beim Austausch mit einer Spritze 3 mit grösserem oder kleinerem Zylinder das zeitaufwändige Einspannen.

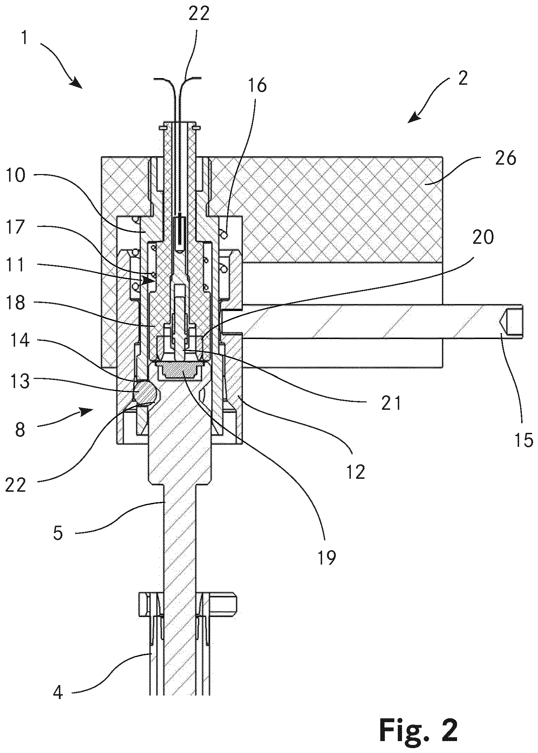

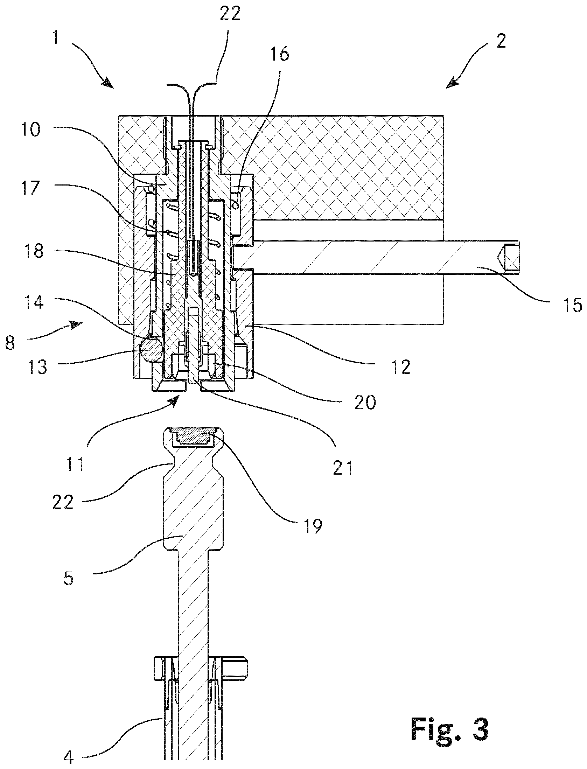

Die Figuren 2 und 3 zeigen Schnittzeichnungen des Probenentnahmesystems der Fig. 1. Die Fig. 2 zeigt die Situation gemäss der Fig. 1, bei welcher die Spritze 3 an der Betätigungsvorrichtung 2 befestigt ist. Die Fig. 3 zeigt die Situation beim Freigeben der Spritze aus der Betätigungsvorrichtung 2.

Die Kupplung 8 verfügt über eine Aufnahme 11, in welche ein Ende des Kolbens 5 der Spritze 3 einführbar ist. Die Aufnahme 11 verfügt über eine umlaufende Wandung 10, welche an einem Arm 26 befestigt ist. Der Arm 26 verbindet die Kupplung 8 mit dem Linearantrieb 9 mit welchem sich die Kupplung relativ zur Halterung 7 linear verschieben lässt.

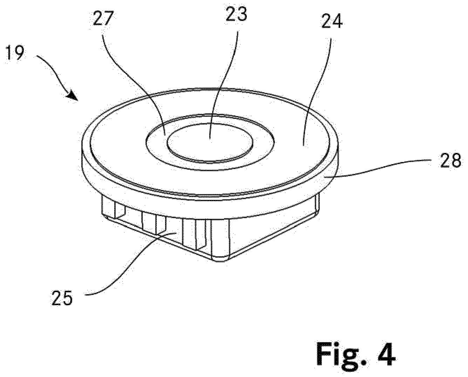

Der Kolben 5 verfügt über eine Chipanordnung 19, welche in der Fig. 4 etwas detaillierter gezeigt wird. Die Chipanordnung 19 verfügt über mindestens zwei Kontaktflächen (siehe Fig. 4), welche mit zwei Kontaktelementen 20, 21, welche innerhalb der Aufnahme 11 der Kupplung 8 angeordnet sind, in Berührung stehen, wenn der Kolben 5 in der Aufnahme 11 eingeführt ist. Die Kontaktelemente 20, 21 sind über Kabel 22 mit einem elektronischen Steuerungssystem (nicht gezeigt) verbunden. Über die Berührung der Kontaktflächen der Chipanordnung 19 mit den Kontaktelementen 20, 21 lassen sich elektrische Signale zwischen der Chipanordnung 19 und dem elektronischen Steuerungssystem austauschen, insbesondere um in einem Speicherelement der Chipanordnung 19 Daten zu schreiben oder diese daraus auszulesen.

Die Kupplung 8 verfügt ferner über eine Hülse 12, welche auf der Aussenseite der Wandung 10 der Aufnahme 11 angeordnet und zu dieser linear verschiebbar gelagert ist. Die Hülse 12 wird durch ein erstes Federelement 16 in die gezeigte, erste Position vorgespannt. In dieser Position wird eine Kugel 13, welche in einer Öffnung 14 der Aufnahme 11 angeordnet ist, in den Innenraum der Aufnahme 11 und somit in Richtung des Kolbens 5 gedrückt. Der Kolben 5 der Spritze 3 verfügt über eine umlaufende Nut 22, in welche die Kugel 13 eingreift. Dadurch wird eine formschlüssige Befestigung des Kolbens 5 in der Aufnahme 11 realisiert.

Wie in der Fig. 3 gezeigt, kann die Hülse 12 mittels eines Aktuators 15 entgegen der Federkraft des ersten Federelements 16 von der Spritze 3 in eine zweite Position weg bewegt werden. Eine Innenwandung der Hülse 12 ist derart geformt, dass die Kugel 13 aus dem Innenraum der Aufnahme 11 bewegt werden kann, wenn sich die Hülse 12 in der zweiten Position befindet. Dadurch kann die Kugel 13 aus dem Eingriff mit der umlaufenden Nut 22 gelöst werden, womit der Kolben 5 aus der Kupplung 8 freigegeben wird.

Innerhalb der Aufnahme 11 ist ein Stössel 18 angeordnet, welcher durch ein zweites Federelement 17 in Richtung des Kolbens 5 beziehungsweise in Richtung einer Öffnung der Aufnahme 11, in welche der Kolben 5 eingeführt werden kann, vorgespannt ist. Die beiden Kontaktelemente 20, 21 sind bei der gezeigten Ausführungsform auf diesem Stössel angeordnet. Dadurch werden diese zusammen mit dem Stössel 18 durch die Federkraft des zweiten Federelements 17 auf die Chipanordnung 19, insbesondere auf die Kontaktflächen der Chipanordnung 19 des Kolbens 5 gedrückt.

Wenn der Kolben 5 durch Bewegen der Hülse 12 in die zweite Position freigegeben ist, wird dieser durch die auf den Stössel 18 wirkende Federkraft des zweiten Federelements 17 aus der Aufnahme 11 gestossen, was die Entnahme des Kolbens 5 aus der Aufnahme vereinfacht.

Die Fig. 4 zeigt eine detailliertere Darstellung der Chipanordnung 19 gemäss der Ausführungsform der Probenentnahmevorrichtung 1 der Figuren 1 bis 3. Die Chipanordnung verfügt über ein Speicherelement 25, welcher als nicht-flüchtiger Speicher ausgestaltet ist. Im Speicherelement 25 werden Daten zur Spritze 3 gespeichert, beispielsweise deren Volumen, Anzahl an ausgeführten Kolbenhüben etc. Das Speicherelement 25 ist mit zwei Kontaktflächen 23, 24 verbunden, welche sich auf der Chipanordnung befinden. Eine erste Kontaktfläche 23 ist als runde Fläche ausgebildet. Eine zweite Kontaktfläche 24 ist als konzentrisch um die erste runde Kontaktfläche 23 angeordnete Kreisfläche ausgebildet. Die erste Kontaktfläche 23 und die zweite Kontaktfläche 24 sind dabei über einen elektrisch isolierenden Abstand 27 voneinander beabstandet. Die Kontaktflächen 23, 24 sind auf einem Teller 28 angeordnet, welcher auf dem Speicherelement 25 befestigt ist.

## Patentansprüche

1. Betätigungsvorrichtung für einen Kolben (5) einer Spritze (3), umfassend eine Halterung (7) für einen Zylinder (4) der Spritze (3), einer relativ zur Halterung (7) linear bewegbaren Kupplung (8) mit einer Aufnahme (11), in welche der Kolben (5) der Spritze (3) eingeführt werden kann, mindestens ein Befestigungselement, mit welchem der Kolben (5) lösbar in der Aufnahme (11) befestigt werden kann, sowie einen Linearantrieb (9) für die Kupplung (8), **dadurch gekennzeichnet, dass** die Kupplung (8) über mindestens zwei elektrisch leitfähige Kontaktelemente (20, 21) verfügt, welche innerhalb der Aufnahme (11) angeordnet sind, um mit entsprechenden elektrisch leitfähigen Kontaktflächen (23, 24) des Kolbens (5) in Kontakt zu treten, wenn der Kolben (5) in die Aufnahme (11) eingeführt ist.

2. Betätigungsvorrichtung gemäss Anspruch 1, **dadurch gekennzeichnet, dass** eine Innenwandung der Aufnahme (11) als ein erstes Kontaktelement der mindestens zwei Kontaktelemente ausgestaltet ist.

3. Betätigungsvorrichtung gemäss Anspruch 1, **dadurch gekennzeichnet, dass** ein erstes Kontaktelement (20) der mindestens zwei Kontaktelemente (20, 21) als runde Fläche und das mindestens eine weitere Kontaktelement (21) als zur runden Fläche konzentrischer Kreis ausgestaltet sind.

4. Betätigungsvorrichtung gemäss einem der Ansprüche 1 oder 3, **dadurch gekennzeichnet, dass** die mindestens zwei Kontaktelemente (20, 21) durch mindestens ein erstes Federelement (16) innerhalb der Aufnahme (11) entgegen einer Einführrichtung des Kolbens (5) vorgespannt sind.

5. Betätigungsvorrichtung gemäss einem der Ansprüche 1 bis 4, **dadurch gekennzeichnet, dass** das mindestens eine Befestigungselement als Formschlusselement ausgestaltet ist, welches in eine umlaufende Nut (22) des Kolbens (5) eingreifen kann, wenn der Kolben (5) in die Aufnahme (11) eingeführt ist.

6. Betätigungsvorrichtung gemäss Anspruch 5, **dadurch gekennzeichnet, dass** das Formschlusselement mindestens eine Kugel (13) umfasst, welche in einer Öffnung (14) der Aufnahme (11) eingelegt ist, wobei auf der Aussenseite der Aufnahme (11) eine Hülse (12) angeordnet ist, welche relativ zur Aufnahme (11) von einer ersten Position in eine zweite Position bewegbar ist, so dass in der ersten Position die mindestens eine Kugel (13) durch die Hülse (12) in einen Innenraum der Aufnahme (11) gedrückt wird und die mindestens eine Kugel (13) in der zweiten Position aus dem Innenraum bewegbar ist.

7. Betätigungsvorrichtung gemäss einem der Ansprüche 1 bis 6, **dadurch gekennzeichnet, dass** der Linearantrieb (9) mindestens eine Spindel umfasst.

8. Betätigungsvorrichtung gemäss einem der Ansprüche 1 bis 7, **dadurch gekennzeichnet, dass** das mindestens eine Befestigungselement derart ausgestaltet ist, dass der Kolben (5) automatisch in der Aufnahme (11) befestigt und aus dieser freigegeben werden kann.

9. Probenentnahmesystem umfassend eine Betätigungsvorrichtung (2) gemäss einem der Ansprüche 1 bis 8 sowie mindestens eine Spritze (3) mit einem Zylinder (4) und einem teilweise innerhalb des Zylinders (4) angeordneten und darin linear verschiebbaren Kolben (5), wobei am einen Ende des Kolbens (5), welches nicht innerhalb des Zylinders (4) angeordnet ist, ein nicht-flüchtiges Speicherelement (25) angeordnet ist, und wobei das Speicherelement (25) mit mindestens zwei elektrisch leitfähigen Kontaktflächen (23, 24) verbunden ist, welche derart geformt und auf dem Zylinder (5) angeordnet sind, dass diese mit den elektrisch leitfähigen Kontaktelementen (20, 21) der Betätigungsvorrichtung (2) in Kontakt treten können, wenn der Kolben (5) in die Aufnahme (11) eingeführt ist.

10. Probenentnahmesystem gemäss Anspruch 9, **dadurch gekennzeichnet, dass** die Betätigungsvorrichtung (2) mit einem elektronischen Steuersystem verbunden ist oder dieses umfasst, wobei das elektronische Steuersystem dazu ausgelegt ist, aus dem nicht-flüchtigen Speicherelement (25) Daten auszulesen und/oder in dieses Daten zu schreiben.

11. Probenentnahmesystem gemäss Anspruch 10, **dadurch gekennzeichnet, dass** die Daten mindestens eine der folgenden Informationen beinhalten: Anzahl ausgeführter Kolbenhübe, Grösse des Zylinders, Seriennummer der Spritze, Herstellungsdatum der Spritze, Gesamtweg der ausgeführten Kolbenhübe, Hersteller der Spritze, Datum des ersten ausgeführten Kolbenhubs, Grösse der mit dem Zylinder verbundenen Kanüle.

12. Probenentnahmesystem gemäss einem der Ansprüche 9 bis 11, **dadurch gekennzeichnet, dass** das Formschlusselement mindestens eine Kugel (13) umfasst, welche in einer Öffnung (14) der Aufnahme (11) eingelegt ist, wobei auf der Aussenseite der Aufnahme (11) eine Hülse (12) angeordnet ist, welche relativ zur Aufnahme (11) von einer ersten Position in eine zweite Position bewegbar ist, so dass in der ersten Position die mindestens eine Kugel (13) durch die Hülse (12) in einen Innenraum der Aufnahme (11) gedrückt wird und die mindestens eine Kugel (13) in der zweiten Position aus dem Innenraum bewegbar ist, weiter **gekennzeichnet dadurch, dass** der Kolben (5) der Spritze (3) auf einer äusseren Mantelfläche über eine umlaufende Nut (22) verfügt, in welche die Kugel eingreift (13), wenn die Hülse (12) in der ersten Position ist.

13. Spritze für ein Probenentnahmesystem gemäss einem der Ansprüche 9 bis 12, umfassend einen Zylinder (4) und einen teilweise innerhalb des Zylinders angeordneten und darin linear verschiebbaren Kolben (5), wobei am einen Ende des Kolbens (5), welches nicht innerhalb des Zylinders (4) angeordnet ist, ein nicht-flüchtiges Speicherelement (25) angeordnet ist, welches mit mindestens zwei elektrisch leitfähigen Kontaktflächen (23, 24) verbunden ist.

14. Spritze gemäss Anspruch 13, **dadurch gekennzeichnet, dass** eine erste Kontaktfläche (23) der mindestens zwei Kontaktflächen (23, 24) rund ausgestaltet ist und die mindestens eine weitere Kontaktfläche (24) als zur runden ersten Kontaktfläche (23) konzentrischer Kreis ausgestaltet ist.

## Claims

1. Actuation device for a piston (5) of a syringe (3), comprising a holder (7) for a barrel (4) of the syringe (3), a coupling (8) which is linearly movable relative to the holder (7) and has a seat (11) into which the piston (5) of the syringe (3) can be inserted, at least one securing element with which the piston (5) can be secured releasably in the seat (11), and a linear drive (9) for the coupling (8), **characterized in that** the coupling (8) has at least two electrically conductive contact elements (20, 21) which are arranged inside the seat (11) in order to come into contact with corresponding electrically conductive contact faces (23, 24) of the piston (5) when the piston (5) is inserted into the seat (11).

2. Actuation device according to Claim 1, **characterized in that** an inner wall of the seat (11) is designed as a first contact element of the at least two contact elements.

3. Actuation device according to Claim 1, **characterized in that** a first contact element (20) of the at least two contact elements (20, 21) is designed as a round face, and the at least one further contact element (21) is designed as a circle concentric to the round face.

4. Actuation device according to either of Claims 1 and 3, **characterized in that** the at least two contact elements (20, 21) are prestressed inside the seat (11), counter to a direction of insertion of the piston (5), by at least a first spring element (16).

5. Actuation device according to one of Claims 1 to 4, **characterized in that** the at least one securing element is designed as a form-fit element, which can engage in a circumferential groove (22) of the piston (5) when the piston (5) is inserted into the seat (11).

6. Actuation device according to Claim 5, **characterized in that** the form-fit element comprises at least one ball (13) which is placed in an opening (14) of the seat (11), wherein a sleeve (12) is arranged on the outside of the seat (11) and is movable relative to the seat (11) from a first position to a second position such that, in the first position, the at least one ball (13) is pressed by the sleeve (12) into an interior of the seat (11) and, in the second position, the at least one ball (13) is movable out of the interior.

7. Actuation device according to one of Claims 1 to 6, **characterized in that** the linear drive (9) comprises at least one spindle.

8. Actuation device according to one of Claims 1 to 7, **characterized in that** the at least one securing element is designed in such a way that the piston (5) can be automatically secured in the seat (11) and released therefrom.

9. Sampling system comprising an actuation device (2) according to one of Claims 1 to 8 and also at least one syringe (3) with a barrel (4) and with a piston (5) arranged partially inside the barrel (4) and linearly displaceable therein, wherein a non-volatile memory element (25) is arranged on an end of the piston (5) not arranged inside the barrel (4), and wherein the memory element (25) is connected to at least two electrically conductive contact faces (23, 24), which are shaped and arranged on the barrel (5) in such a way that they can come into contact with the electrically conductive contact elements (20, 21) of the actuation device (2) when the piston (5) is inserted into the seat (11).

10. Sampling system according to Claim 9, **characterized in that** the actuation device (2) is connected to an electronic control system or comprises the latter, wherein the electronic control system is configured to read out data from the non-volatile memory element (25) and/or to write data into the latter.

11. Sampling system according to Claim 10, **characterized in that** the data contain at least one of the following items of information: number of piston strokes executed, size of the barrel, serial number of the syringe, production date of the syringe, total travel of the executed piston strokes, manufacturer of the syringe, data of the first executed piston stroke, size of the needle connected to the barrel.

12. Sampling system according to one of Claims 9 to 11, **characterized in that** the form-fit element comprises at least one ball (13) which is placed in an opening (14) of the seat (11), wherein a sleeve (12) is arranged on the outside of the seat (11) and is movable relative to the seat (11) from a first position to a second position such that, in the first position, the at least one ball (13) is pressed by the sleeve (12) into an interior of the seat (11) and, in the second position, the at least one ball (13) is movable out of the interior, further **characterized in that** an outer circumferential surface of the piston (5) of the syringe (3) has a circumferential groove (22) in which the ball (13) engages when the sleeve (12) is in the first position.

13. Syringe for a sampling system according to one of Claims 9 to 12, comprising a barrel (4) and a piston (5) arranged partially inside the barrel and linearly displaceable therein, wherein a non-volatile memory element (25) is arranged on an end of the piston (5) not arranged inside the barrel (4), which memory element is connected to at least two electrically conductive contact faces (23, 24).

14. Syringe according to Claim 13, **characterized in that** a first contact face (23) of the at least two contact faces (23, 24) is round, and the at least one further contact face (24) is designed as a circle concentric to the round first contact face (23)

## Revendications

1. Dispositif d'actionnement pour un piston (5) d'une seringue (3), comprenant un support (7) pour un cylindre (4) de la seringue (3), d'un couplage (8) mobile de manière linéaire par rapport au support (7) avec un logement (11), dans lequel le piston (5) de la seringue (3) peut être introduit, au moins un élément de fixation, avec lequel le piston (5) peut être fixé de manière amovible dans le logement (11), ainsi qu'un entraînement linéaire (9) pour le couplage (8), **caractérisé en ce que** le couplage (8) dispose d'au moins deux éléments de contact électriquement conducteurs (20, 21), lesquels sont agencés à l'intérieur du logement (11) pour entrer en contact avec des surfaces de contact électriquement conductrices correspondantes (23, 24) du piston (5), lorsque le piston (5) est introduit dans le logement (11).

2. Dispositif d'actionnement selon la revendication 1, **caractérisé en ce qu'**une paroi intérieure du logement (11) est configurée en tant que premier élément de contact des au moins deux éléments de contact.

3. Dispositif d'actionnement selon la revendication 1, **caractérisé en ce qu'**un premier élément de contact (20) des au moins deux éléments de contact (20, 21) est configuré en tant que surface ronde et l'au moins un autre élément de contact (21) est configuré en tant que cercle concentrique par rapport à la surface ronde.

4. Dispositif d'actionnement selon l'une quelconque des revendications 1 ou 3, **caractérisé en ce que** les au moins deux éléments de contact (20, 21) sont précontraints par au moins un premier élément ressort (16) à l'intérieur du logement (11) dans le sens contraire au sens d'introduction du piston (5).

5. Dispositif d'actionnement selon l'une quelconque des revendications 1 à 4, **caractérisé en ce que** l'au moins un élément de fixation est configuré en tant qu'élément à complémentarité de forme, lequel peut entrer en prise dans une rainure périphérique (22) du piston (5), lorsque le piston (5) est introduit dans le logement (11).

6. Dispositif d'actionnement selon la revendication 5, **caractérisé en ce que** l'élément à complémentarité de forme comprend au moins une bille (13), laquelle est insérée dans une ouverture (14) du logement (11), dans lequel une douille (12) est agencée sur le côté extérieur du logement (11), laquelle est mobile par rapport au logement (11) d'une première position à une deuxième position, de sorte que dans la première position, l'au moins une bille (13) est pressée par la douille (12) dans un espace intérieur du logement (11) et l'au moins une douille (13) est mobile dans la deuxième position hors de l'espace intérieur.

7. Dispositif d'actionnement selon l'une quelconque des revendications 1 à 6, **caractérisé en ce que** l'entraînement linéaire (9) comprend au moins une broche.

8. Dispositif d'actionnement selon l'une quelconque des revendications 1 à 7, **caractérisé en ce que** l'au moins un élément de fixation est configuré de telle sorte que le piston (5) peut être fixé automatiquement dans le logement (11) et en être libéré.

9. Système de prélèvement d'échantillon comprenant un dispositif d'actionnement (2) selon l'une quelconque des revendications 1 à 8 ainsi qu'au moins une seringue (3) avec un cylindre (4) et un piston (5) agencé partiellement à l'intérieur du cylindre (4) et déplaçable de manière linéaire à l'intérieur de celui-ci, dans lequel un élément de mémoire non volatile (25) est agencé à une extrémité du piston (5), laquelle n'est pas agencée à l'intérieur du cylindre (4), et dans lequel l'élément de mémoire (25) est relié à au moins deux surfaces de contact électriquement conductrices (23, 24), lesquelles sont formées et agencées sur le cylindre (5) de telle sorte que celles-ci peuvent entrer en contact avec les éléments de contact électriquement conducteurs (20, 21) du dispositif d'actionnement (2), lorsque le piston (5) est introduit dans le logement (11).

10. Système de prélèvement d'échantillon selon la revendication 9, **caractérisé en ce que** le dispositif d'actionnement (2) est relié à un système de commande électronique ou le comprend, dans lequel le système de commande électronique est conçu pour lire des données de l'élément de mémoire non volatile (25) et/ou écrire des données dans celui-ci.

11. Système de prélèvement d'échantillon selon la revendication 10, **caractérisé en ce que** les données comportent au moins une des informations suivantes : nombre de courses de piston effectuées, taille du cylindre, numéro de série de la seringue, date de fabrication de la seringue, distance totale des courses de piston effectuées, fabricant de la seringue, date de la première course de piston effectuée, taille de la canule reliée au cylindre.

12. Système de prélèvement d'échantillon selon l'une quelconque des revendications 9 à 11, **caractérisé en ce que** l'élément à complémentarité de forme comprend au moins une bille (13), laquelle est insérée dans une ouverture (14) du logement (11), dans lequel une douille (12) est agencée sur le côté extérieur du logement (11), laquelle est mobile par rapport au logement (11) d'une première position à une deuxième position, de sorte que dans la première position, l'au moins une bille (13) est pressée par la douille (12) dans un espace intérieur du logement (11) et l'au moins une bille (13) est mobile dans la deuxième position hors de l'espace intérieur, **caractérisé en outre en ce que** le piston (5) de la seringue (3) dispose sur une surface d'enveloppe extérieure d'une rainure périphérique (22), dans laquelle la bille entre en prise (13), lorsque la douille (12) est dans la première position.

13. Seringue pour un système de prélèvement d'échantillon selon l'une quelconque des revendications 9 à 12, comprenant un cylindre (4) et un piston (5) agencé partiellement à l'intérieur du cylindre (4) et déplaçable de manière linéaire à l'intérieur de celui-ci, dans laquelle un élément de mémoire non volatile (25), lequel est relié à au moins deux surfaces de contact électriquement conductrices (23, 24), est agencé à une extrémité du piston (5), laquelle n'est pas agencée à l'intérieur du cylindre (4).

14. Seringue selon la revendication 13, **caractérisée en ce qu'**une première surface de contact (23) des au moins deux surfaces de contact (23, 24) est configurée de manière ronde et l'au moins une autre surface de contact (24) est configurée en tant que cercle concentrique par rapport à la première surface de contact ronde (23).
